# FASCICULE DE BREVET EUROPEEN

(11) **EP 3 329 155 B1**
(45) Date de publication et mention de la délivrance du brevet: **15.04.2020**
(21) Numéro de dépôt: 16744754.9
(22) Date de dépôt: 27.07.2016
(51) Int. Cl.: F16H 61/4017, F16H 61/4078, F16K 17/06, F16K 17/04

(54) **LIMITEUR DE PRESSION COMPRENANT DEUX CLAPETS DE SÉLECTEUR SÉPARÉS**
DRUCKBEGRENZUNGSVORRICHTUNG MIT ZWEI SEPARATEN SCHALTVENTILEN
PRESSURE LIMITING DEVICE COMPRISING TWO SEPARATE SELECTOR VALVES

(30) Priorité: 28.07.2015 FR 1501624
(43) Date de publication de la demande: 06.06.2018
(73) Titulaire: Poclain Hydraulics Industrie, 60410 Verberie (FR)
(72) Inventeur: BOZIC, Ante, 60410 Verberie (FR)
(74) Mandataire: Regimbeau
(86) Numéro de dépôt international: PCT/EP2016/067951
(87) Numéro de publication internationale: WO 2017/017157

(56) Documents cités:
- FR-A1- 2 690 494
- FR-A1- 2 996 176
- FR-A5- 2 130 805

## Description

### DOMAINE TECHNIQUE GENERAL

L'invention concerne la gestion des surpressions des circuits hydrauliques, et plus particulièrement les dispositifs de type « limiteur de pression » ou « soupape de protection ».

L'invention s'applique notamment aux circuits d'assistance hydraulique pour véhicule.

Les assistances hydrauliques sont effectuées à l'aide de machines hydrauliques qui peuvent fournir du couple aux roues motorisées. Ces machines transforment l'énergie hydraulique d'une huile sous pression en une énergie mécanique, ou inversement.

### ETAT DE L'ART

Sur un véhicule, une première machine hydraulique M1 est montée sur l'essieu avant et une deuxième machine hydraulique M2 est montée sur l'essieu arrière. Par machines, on signifie qu'elles peuvent fonctionner en moteur ou en pompe. D'une manière générale, une des machines est affectée à un essieu entrainé mécaniquement, tandis que l'autre est affectée à un essieu porteur.

La configuration présentée correspond à une « chaîne à vélo » (document FR2996176), c'est-à-dire qu'en utilisation principale la première machine M1 fait office de pompe pour la deuxième machine M2 qui fait office de moteur.

Le véhicule comprend généralement un moteur thermique (non représenté sur les figures) qui entraine directement ou indirectement la première machine hydraulique M1 par une liaison mécanique. La deuxième machine M2 est reliée aux roues porteuses du véhicule. De cette manière, en cas de patinage des roues entrainées mécaniquement, la machine M1 peut transférer du couple vers les roues porteuses reliées à la machine M2. Il peut y avoir plusieurs machines M1 ou M2 sur plusieurs essieux.

A cette fin, le refoulement de la première machine M1 est relié à l'admission de la deuxième machine M2 par une ligne 11 dite haute pression et le refoulement de la deuxième machine M2 est relié à l'admission de la première machine M1 par une ligne 12 dite basse pression.

Les termes de haute et basse pression correspondent à une utilisation en marche avant avec apport de couple (« utilisation principale »).

Par conséquent, comme les pressions peuvent s'inverser, les termes de première ligne 11 et de deuxième ligne 12 seront préférés.

La première et la deuxième ligne 11, 12 fonctionnent en circuit fermé et peuvent être sujettes à des surpressions pouvant endommager les machines M1, M2 ou les joints présents sur le circuit. Elles définissent une boucle fermée.

A titre d'exemple, les pressions sont de l'ordre de 400 bars dans une ligne et de quelques dizaines de bars dans l'autre ligne, à tout le moins une pression de gavage.

Pour protéger le circuit hydraulique et notamment les première et deuxième lignes 11, 12, il est connu de disposer deux limiteurs de pression.

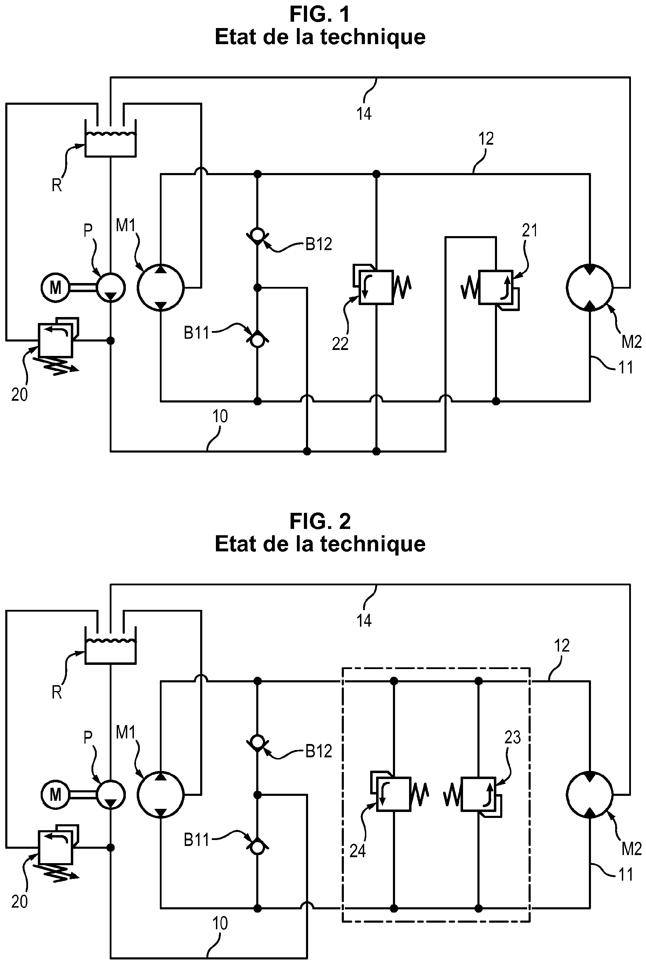

La **figure 1** représente une première variante de l'état de l'art : un limiteur de pression 21 est disposé entre la première ligne 11 et une ligne de gavage 10, un autre limiteur 22 est disposé entre la deuxième ligne 12 et la ligne de gavage 10.

Chaque limiteur 21, 22 peut être taré à la valeur souhaitée. La ligne de gavage 10 est une ligne permettant à une pompe de gavage P, actionnée par un moteur M, typiquement un moteur électrique, ce qui crée un groupe électropompe, d'alimenter en huile les première et deuxième lignes 11, 12 via des clapets anti-retour B11, B12, afin d'enclencher l'assistance hydraulique. Du fait d'un limiteur de pression 20 en parallèle de la pompe P, le circuit de gavage 10 permet l'évacuation de surpression.

Cette solution utilise deux organes de protection (les limiteurs de pression 21, 22).

La **figure 2** représente une deuxième variante de l'état de l'art : on a toujours deux limiteurs 23, 24 disposés comme précédemment sauf que chacun déverse la surpression dans l'autre ligne parmi les première et deuxième lignes 11, 12. Une ligne étant toujours en pression moindre, elle pourra supporter la surpression présente dans l'autre.

Cette solution utilise elle aussi deux organes de protection (les limiteurs de pression 23, 24). On retrouve également sur la figure 2 deux clapets anti-retour B11, B12 qui servent au gavage.

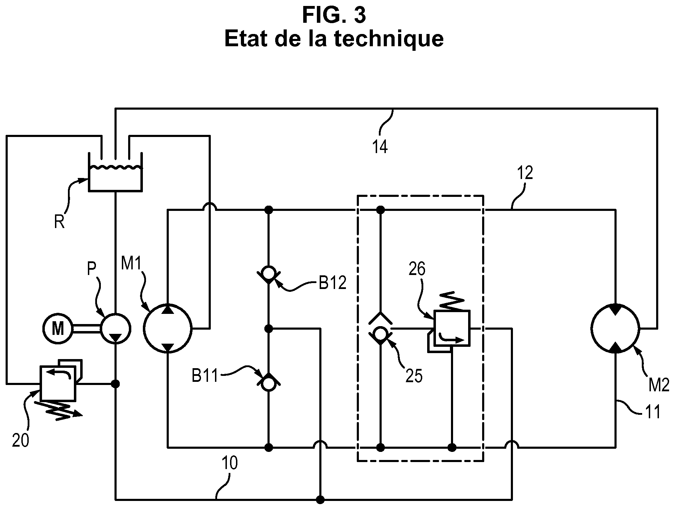

La **figure 3** représente une troisième variante de l'état de l'art : un sélecteur haute-pression 25 sélectionne la ligne de plus haute pression entre la première et la deuxième ligne 11, 12 et l'envoie vers la ligne de gavage 10 *via* un limiteur de pression 26. De cette façon, on supprime un limiteur mais il faut ajouter un sélecteur de circuit 25.

Cette solution utilise elle aussi deux organes de protection. On retrouve également sur la figure 3 deux clapets anti-retour B11, B12 qui servent au gavage.

On a décrit également dans le document US 2005/0097887 une autre variante de dispositif de limitation de pression comprenant un sélecteur de pression en forme de cage associé à deux clapets de surpression. En fonctionnement normal, le sélecteur de pression autorise une liaison entre une ligne de gavage et une ligne d'alimentation basse pression. En cas de surpression sur une ligne, le clapet de surpression associé s'ouvre et autorise une évacuation de la surpression vers la ligne de gavage.

Les dispositifs précédemment décrits ont déjà rendu de grands services.

Néanmoins, ils ne donnent pas toujours satisfaction.

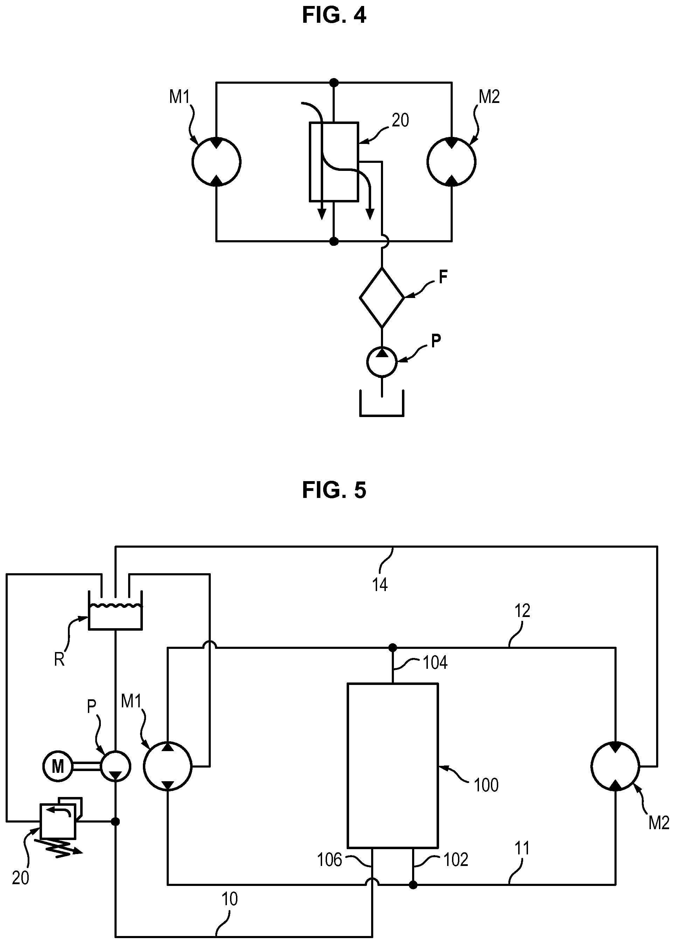

Comme on l'a schématisé sur la figure 4, en cas de patinage d'une roue associée à l'un des moteurs, l'on peut assister à une montée en pression de la ligne théoriquement en basse pression, par ouverture d'un clapet de surpression associé 20 qui court-circuite le moteur concerné, avec possibilité de montée en pression sur les deux lignes 11, 12, ainsi que le cas échéant sur la ligne de gavage 10, et de là risque de détérioration de la pompe de gavage P, voir d'un filtre F associé. Ce risque existe également dans le cas d'une installation comprenant deux machines M1, M2 associées respectivement à deux essieux comme on le voit sur la figure 4.

Le document FR 2130805 décrit un dispositif de réalimentation et de décharge de circuits hydrauliques de transmissions hydrostatiques.

Dans ce contexte, l'invention a pour objectif de proposer un nouveau dispositif limiteur de pression qui permet d'améliorer la situation, notamment en améliorant le contrôle en pression, tout en permettant un effet de sélection de la ligne à raccorder au dispositif de gavage.

La présente invention a également pour objet de proposer un dispositif limiteur de pression qui optimise l'espace disponible et diminue les coûts de fabrication, avec des organes simples.

### PRESENTATION DE L'INVENTION

Pour cela, l'invention propose un dispositif de limitation de pression du type défini en revendication 1 annexée.

Comme on le comprendra par la suite, l'utilisation d'un organe élastique intercalé entre les obturateurs des deux clapets de sélecteur offre l'avantage de permettre la fermeture simultanée des deux clapets du sélecteur lorsque la pression sur les deux lignes d'alimentation est simultanément supérieure au seuil de consigne.

Selon une autre caractéristique avantageuse de l'invention l'organe élastique précité est placé entre les obturateurs des deux clapets de surpression.

La limitation de pression se fait dorénavant à l'aide d'un seul dispositif, ce qui améliore la compacité du système ainsi que son coût de fabrication, par rapport à certaines solutions connues de l'état de la technique.

L'invention concerne également les systèmes d'assistance et les véhicules équipés d'un dispositif de limitation de pression conforme à l'invention.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- Les figures 1 à 3 représentent des variantes de l'art antérieur,
- La figure 4 représente schématiquement le risque de montée en pression sur une ligne basse pression en cas de patinage d'une roue associée à un moteur,
- La figure 5 représente schématiquement un circuit d'assistance intégrant un dispositif de limitation de pression 100 conforme à l'invention qui intègre des moyens qui remplissent la fonction d'un sélecteur de pression et de deux limiteurs 21 et 22 ou 23, 24 ou 25, 26 représentés sur les figures 1 à 3,
- La figure 6 représente schématiquement, selon une vue en coupe axiale longitudinale, la structure d'un dispositif conforme à un premier mode de réalisation de l'invention,
- Les figures 7, 8, 9, 10 et 11 représentent le même dispositif dans cinq états de fonctionnement et
- La figure 12 représente schématiquement, selon une vue en coupe axiale longitudinale, la structure d'un dispositif conforme à un deuxième mode de réalisation de l'invention.

### DESCRIPTION DETAILLEE

La figure 5 représente un système conforme à l'invention intégrant un dispositif de limitation de pression 100 conforme à l'invention qui intègre des moyens qui remplissent la fonction d'un sélecteur de pression et deux limiteurs de pression.

Le dispositif 100 comprend trois ports 102, 104, 106 : deux ports 102, 104 qui communiquent respectivement avec les lignes 11 et 12 et un port 106 qui communique avec la ligne de gavage 10.

La ligne de gavage peut être alimentée en huile par la pompe de gavage P jusqu'à atteindre la pression de gavage, qui rend les machines M1 M2 opérationnelles, ou bien la ligne de gavage peut être aspirée par la pompe de gavage, ce qui rend les machines M1 M2 non opérationnelles. Les machines M1 et M2 sont d'un type qui devient non opérationnel ou débrayable, en dessous d'une seuil de pression dans les lignes 11 et 12. Le sélecteur raccorde automatiquement la ligne à plus basse pression au gavage, ce qui permet une mise en fonction, ou une mise hors fonction de la transmission, qui sont souples et ordonnées.

On va tout d'abord décrire le premier mode de réalisation conforme à la présente invention illustré sur les figures 5 à 11.

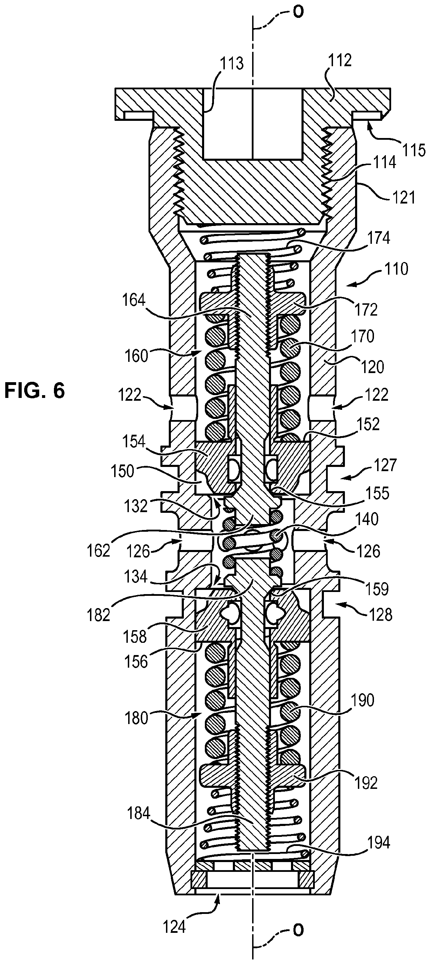

Le dispositif de limitation de pression 100 représenté sur la figure 6 comprend essentiellement un corps 110, un ensemble 150 formant sélecteur et deux clapets de surpression 160, 180.

Le dispositif 100 est centré sur un axe longitudinal de symétrie O-O. Le dispositif 100 est globalement symétrique de révolution autour de l'axe O-O.

Le corps 110 est formé d'une cartouche adaptée pour être intégrée dans toute structure support, par exemple sur le carter d'un moteur hydraulique.

Le corps 110 est formé de préférence par assemblage d'un carter 120 et d'un bouchon 112. Le bouchon 112 peut être fixé sur une extrémité axiale du carter 120 par tout moyen approprié, par exemple par sertissage ou de préférence par vissage au niveau de filetages complémentaires 114. Le bouchon 112 peut être équipé d'une forme 113 non cylindrique de révolution permettant son serrage, ainsi que d'une gorge 115 adaptée pour recevoir un joint d'étanchéité en contact avec la structure support. L'extrémité axiale du carter 120 peut être munie sur sa surface extérieure d'un filetage 121 permettant l'assemblage du dispositif 100 sur cette structure support.

Le carter 120 comprend au moins trois passages traversants 122, 124, 126 qui correspondent aux trois ports 102, 104, 106 précités.

L'un des passages traversant 126 est formé en partie médiane sur la longueur du carter 120 et correspond au port 106. Plus précisément, de préférence, il est prévu plusieurs orifices 126 équi-répartis autour de l'axe O-O formant le port 106.

Les passages 122 et 124 sont formés respectivement de part et d'autre du passage médian 126. Plus précisément de préférence, le passage 122 est formé de plusieurs orifices 122 équi-répartis autour de l'axe O-O formant le port 102.

Le passage 124 peut également être formé de plusieurs orifices équi-répartis autour de l'axe O-O formant le port 104. Cependant, selon le mode de réalisation préférentiel, pour des raisons de fabrication et d'assemblage, le passage 124 est formé d'un orifice qui débouche axialement sur le carter 120 à l'extrémité opposée au bouchon 112.

Le carter 120 comprend de préférence sur sa surface extérieure deux gorges annulaires 127, 128 destinées à recevoir des joints respectifs en contact avec la structure support permettant d'isoler entre elles les liaisons hydrauliques assurées vers les passages 122, 126 et 124.

Le carter 120 comprend sur sa surface interne et au niveau du passage médian 126 un rétrécissement 130 qui s'étend axialement de part et d'autre du passage 126. Le rétrécissement 130 définit respectivement sur ses deux extrémités axiales deux sièges 132, 134 associées au sélecteur 150.

Le rétrécissement 130 qui forme les deux sièges 132, 134 peut être venu de matière sur la surface interne du carter 120 ou être formé d'une pièce séparée rapportée sur la surface du carter 120 et fixée par tout moyen approprié, par exemple par sertissage.

Les deux sièges 132, 134 sont orientés respectivement vers les extrémités axiales du carter 120.

Le sélecteur 150 comprend deux clapets de sélecteur séparés 152, 156.

Chaque clapet de sélecteur 152, 156 comprend un obturateur annulaire 154, 158 placé en regard des sièges précités 132, 134.

Le diamètre extérieur des obturateurs 154, 158 est supérieur au diamètre des sièges 132, 134.

Ainsi, lorsque l'un des obturateurs 154, 158 repose sur le siège associé 132, 134, le clapet correspondant du sélecteur 150 est fermé. Inversement, lorsque un obturateur 154, 158 est séparé du siège associé 132, 134, le clapet correspondant du sélecteur 150 est ouvert.

Comme on le comprendra à la lecture de la description qui va suivre, l'utilisation de deux clapets séparés 132/154 et 134/158 pour former le sélecteur 150, permet la fermeture simultanée des deux clapets du sélecteur lorsque la pression sur les deux lignes d'alimentation est simultanément supérieure au seuil de consigne

Chaque obturateur 154, 158 possède un passage axial traversant destiné à recevoir à coulissement la tige support 164, 184 portant un obturateur 162, 182 des clapets de surpression 160, 180.

Les obturateurs précités 154, 158 définissent également sur leur périphérie radialement interne et sur leurs faces en regard dirigées vers le centre du dispositif, deux sièges annulaires 155, 159 dirigés axialement vers la partie médiane du sélecteur 150 et destinés à coopérer respectivement avec les obturateurs 162, 182.

Les obturateurs 162, 182 sont formés d'excroissances sur une extrémité des tiges 164, 184. Les obturateurs sont placés sur l'intérieur des sièges 155, 159 dans la partie centrale du dispositif.

Les tiges 164, 184 émergent axialement sur chaque extrémité de l'obturateur associé 154, 158 du sélecteur 150. Chaque tige 164, 184 et son obturateur associé 162, 182 sont sollicités vers une extrémité axiale respective du carter 120 par un ressort respectif 170, 190.

Ainsi, les obturateurs 162, 182 sont sollicités respectivement en appui contre les sièges 155, 159.

Les ressorts 170, 190 sont intercalés sur les tiges 164, 184, entre les obturateurs 154, 158 et des butées 172, 192 en forme de bagues portées par les tiges 164, 184.

De préférence, les butées 172, 192 sont réglables en position sur la longueur des tiges 164, 184 pour définir l'effort exercé par chaque ressort 170, 190 et par conséquent le tarage de la pression d'ouverture de chaque clapet de surpression.

Les butées 172, 192 peuvent être fixées en position sur leur tige respective 164, 184 par tout moyen approprié, par exemple par vissage ou sertissage.

Par ailleurs comme indiqué précédemment, selon l'invention, un organe élastique 140 est intercalé entre les obturateurs 162, 182 des deux clapets séparés de sélecteur. L'organe élastique 140 est formé de préférence d'un ressort hélicoïdal travaillant à la compression. Cet organe élastique 140 est taré de sorte que lorsque la pression de travail sur la première ligne et sur la deuxième ligne est inférieure à un seuil de consigne, l'un des clapets 132/154 du sélecteur est ouvert tandis que l'autre clapet 134/158 du sélecteur est fermé, alors que quand la pression de travail sur la première ligne et sur la deuxième ligne est supérieure au seuil de consigne, les deux clapets du sélecteur 132/154 et 134/158 sont fermés.

Pour assembler le dispositif de limitation de pression précédemment décrit illustré sur la figure 6, on procède essentiellement comme suit.

Dans un premier temps, l'on assemble les obturateurs 162, 182 et leurs tiges 164, 184 équipés des ressorts 170, 190 et des butées 172, 192 sur les obturateurs respectifs 154, 158. Les butées 172, 192 sont réglées en position pour le tarage recherché.

Les sous-ensembles de clapet de surpression ainsi formés sont introduits dans le carter 120, respectivement par chaque extrémité de celui-ci, de part et d'autre du rétrécissement, en veillant à placer l'organe élastique 140 entre les deux obturateurs 162, 182.

Puis, le bouchon 112 est fixé sur l'extrémité du carter 120. Les joints d'étanchéité sont placés dans leurs gorges respectives.

De préférence des ressorts de positionnement 174, 194 sont placés sur l'extérieur de chaque sous ensemble de surpression précités pour maintenir au repos les obturateurs 154, 158 en appui contre les sièges respectifs associés 132, 134.

Plus précisément le ressort 174 est placé entre le bouchon 112 et la butée 172, tandis que le ressort 194 est placé entre la butée 192 et une bague d'arrêt 195, fixée sur l'extrémité du corps 110 opposée au bouchon 112.

Les ressorts 174 et 194 sont cependant optionnels. En effet ils ne sont pas indispensables au fonctionnement du dispositif conforme à l'invention.

Puis, le bouchon 112 est fixé sur l'extrémité du carter 120. Les joints d'étanchéité sont placés dans leurs gorges respectives.

Le fonctionnement du dispositif de limitation représenté sur les figures 6 à 11 est essentiellement le suivant.

Au repos, en absence de pression sur le port 106 et donc dans la ligne de gavage 10 et par conséquent sur les ports 102, 104 et donc dans les lignes d'alimentation 11, 12, les obturateurs 154 et 158 du sélecteur 150 sont susceptibles de déplacement dans le carter 120 en regard des sièges 132, 134, dans le cas où les ressorts de positionnement 174, 194 sont omis. Cependant les obturateurs 154, 158 reposent contre les sièges 132, 134 grâce à la sollicitation des ressorts 174, 194 et 170, 190. Les obturateurs 162, 182 sollicités par les ressorts 170, 190 reposent sur leurs sièges respectifs 155, 159 et les clapets de surpression sont par conséquent fermés.

En fonctionnement, lors de l'activation de la pompe de gavage P et d'un choix de sens de rotation de la machine M1, l'un des ports 102, 104 est soumis à une haute pression tandis que l'autre port 104, 102 est soumis à une basse pression de retour.

L'un des clapets du sélecteur 150 est ainsi sollicité par la haute pression.

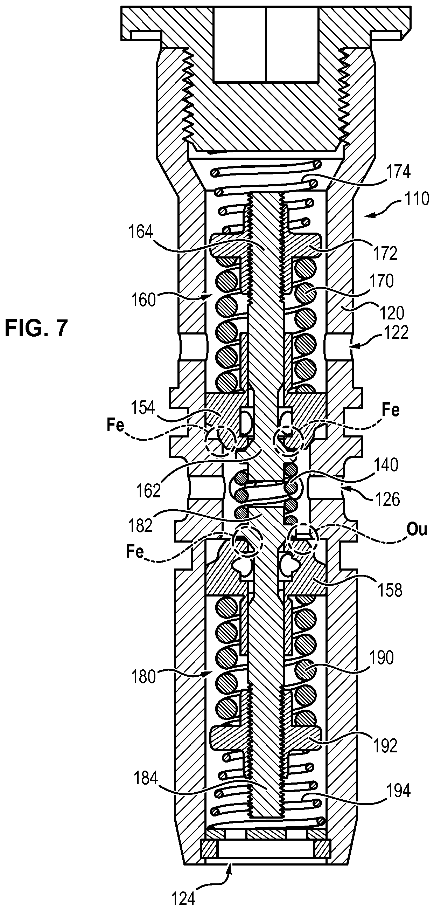

Si comme illustré sur la figure 7, la haute pression est appliquée au port 102 correspondant au passage 122, l'obturateur 154 du sélecteur 150 est sollicité en contact contre le siège 132. Le clapet de sélection correspondant est fermé. Inversement, une basse pression est appliquée au port 104 correspondant au passage 124. L'obturateur 158 du sélecteur 150 est séparé du siège 134. Le clapet de sélection correspondant est ouvert.

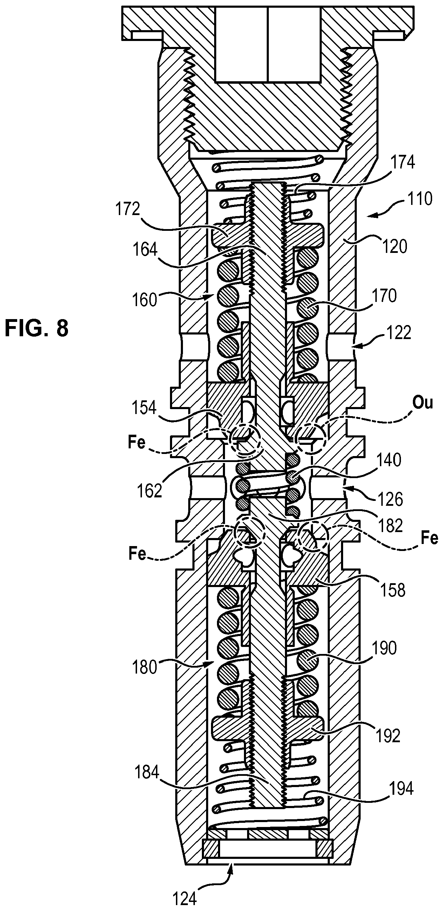

Comme on le voit sur la figure 8, en cas d'inversion du sens de rotation, la haute pression est appliquée au port 104 correspondant au passage 124. L'obturateur 158 du sélecteur 150 est sollicité en contact contre le siège 134. Le clapet de sélection correspondant est fermé. Inversement, une basse pression est appliquée au port 102 correspondant au passage 122. L'obturateur 154 du sélecteur 150 est séparé du siège 132. Le clapet de sélection correspondant est ouvert.

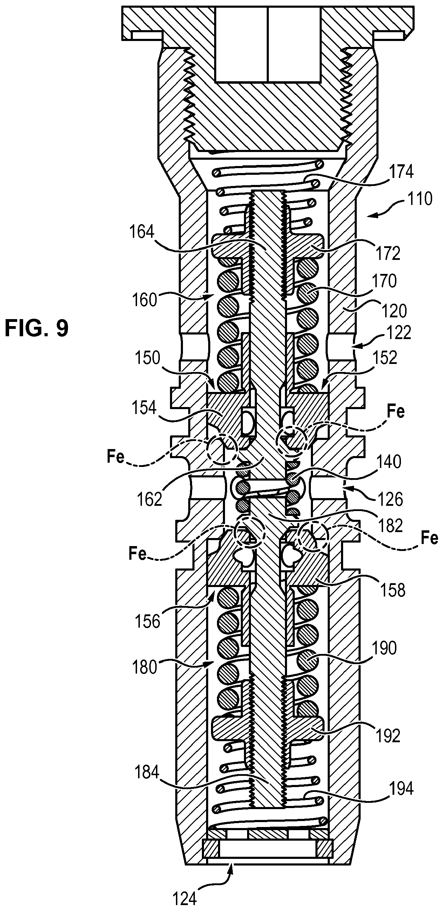

Comme on le voit sur la figure 9, lorsque la pression de travail dans les deux lignes 11 et 12 est supérieure à un seuil de consigne qui correspond à l'effondrement de l'organe élastique 140, cet organe élastique 140 est comprimé et les deux clapets 132/154 et 134/158 du sélecteur sont fermés.

Le fonctionnement du sélecteur est identique au moment de la mise en service ou de la mise hors service des machines hydrauliques, par l'utilisation de la pompe de gavage, dans le sens de faire entrer de l'huile dans la boucle fermée, ou de faire sortir de l'huile de la boucle fermée.

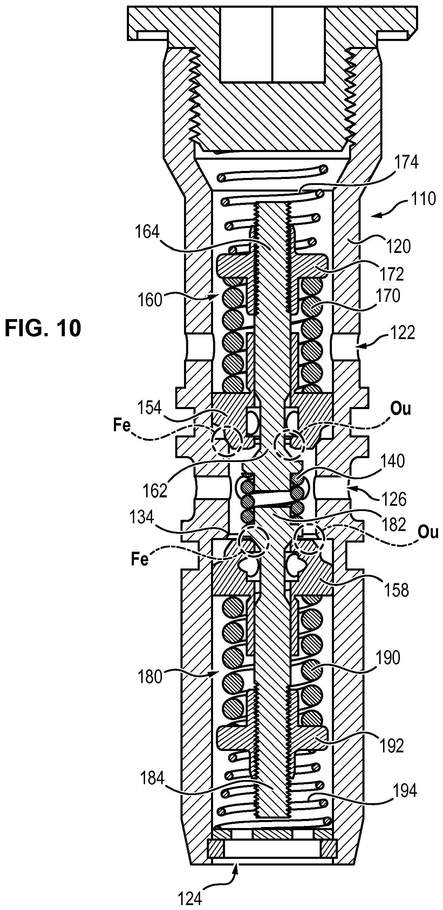

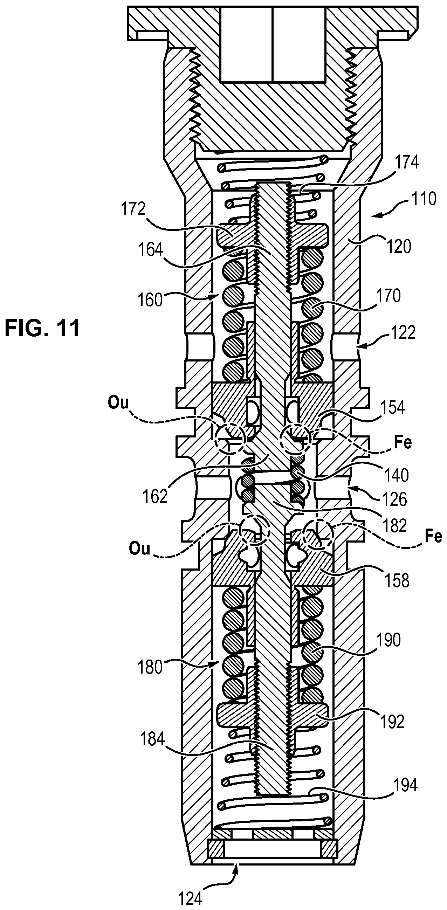

Lorsque la pression dans une ligne 11, 12 dépasse le seuil de tarage des clapets de surpression définis par les ressorts 170, 190, cette surpression appliquée aux obturateurs 162, 182 assurent respectivement l'ouverture des clapets de surpression, comme illustré sur les figures 10 et 11 par la séparation des obturateurs 162, 182 vis-à-vis de leurs sièges 155, 159. La surpression correspondante est alors évacuée vers la ligne de gavage 10 ainsi que vers l'autre ligne d'alimentation.

Sur les figures 7 à 11 les clapets fermés sont répertoriés Fe tandis que les clapets ouverts sont répertoriés Ou.

L'on observera que la distance qui sépare au repos les extrémités en regard des deux obturateurs 162, 182 doit être suffisante pour permettre un déplacement suffisant de cet obturateur pour assurer une ouverture du clapet de surpression correspondant propre à ne pas créer de pertes de charge notables.

De préférence cette distance est suffisante pour permettre en cas de surpression simultanée sur les deux lignes 11 et 12, une ouverture simultanée des deux clapets de surpression.

De cette manière, il est possible de protéger les deux lignes 11 et 12 vis-à-vis de la surpression, dans le cas où le système a été en traction a fort couple, et donc à pression élevée. Dans ce cas, en cas de patinage des deux essieux, par décompression, une des lignes 11,12 pourrait se décomprimer dans l'autre des lignes 11, 12. les deux lignes seraient en surpression, ce qui endommagerait la pompe de gavage. Pour ce cas particulier, il est nécessaire que les deux clapets e surpression puissent s'ouvrir de manière simultanée.

L'homme de l'art comprendra que la réalisation conforme à l'invention permet d'intégrer l'ensemble des fonctions dans un composant en forme de cartouche tout en permettant un réglage simple et fiable, ainsi que de manière indépendante, du tarage de chaque clapet de surpression.

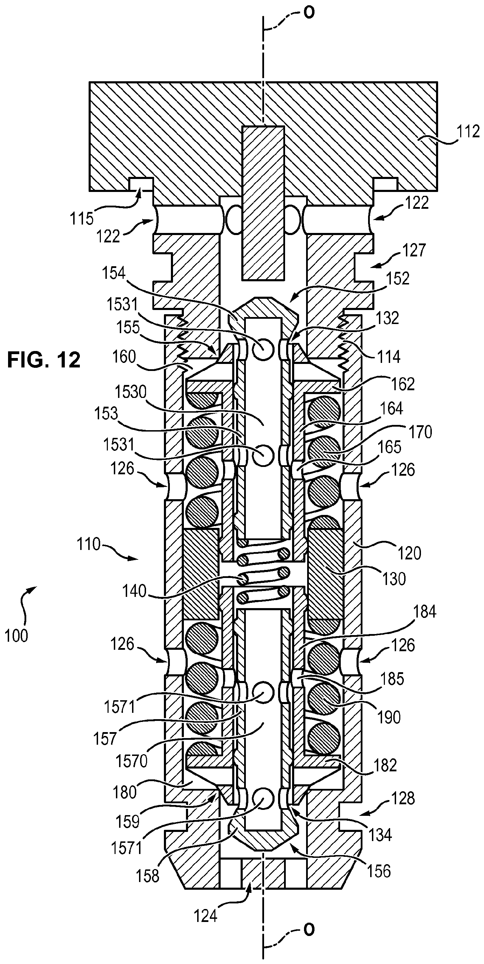

On va maintenant décrire le deuxième mode de réalisation représenté sur la figure 12.

Le deuxième mode de réalisation représenté sur la figure 12 se distingue essentiellement du premier mode de réalisation représenté sur les figures 6 à 11 par le fait que selon le premier mode de réalisation les valves de surpression 155/162 et 159/182, placées au centre, sont portées par les valves de sélection 132/154 et 134/158, tandis que selon le deuxième mode de réalisation représenté sur la figure 12, les valves de sélection 132/154 et 134/158, placées au centre, sont portées par les valves de surpression 155/162 et 159/182.

On retrouve sur la figure 12 un dispositif de limitation de pression 100 centré sur un axe longitudinal de symétrie de révolution O-O qui comprend essentiellement un corps 110, deux clapets de sélecteur 152, 156 et deux clapets de surpression 160, 180.

Le corps 110 représenté sur la figure 12 est également formé d'une cartouche adaptée pour être intégrée dans une structure support, par exemple sur le carter d'un moteur hydraulique, formée de préférence par assemblage d'un carter 120 et d'un bouchon 112. Le bouchon 112 peut être fixé sur une extrémité axiale du carter 120 par tout moyen approprié, par exemple par sertissage ou de préférence par vissage au niveau de filetages complémentaires 114. Le bouchon 112 peut être équipé d'une gorge 115 adaptée pour recevoir un joint d'étanchéité en contact avec la structure support. Le carter 120 peut être munie sur sa surface extérieure d'un filetage permettant l'assemblage du dispositif 100 sur cette structure support.

Le carter 120 comprend au moins trois passages traversants 122, 124, 126 qui correspondent aux trois ports 102, 104, 106 précités.

L'un des passages traversant 126 est formé en partie médiane sur la longueur du carter 120 et correspond au port 106. Plus précisément, de préférence, il est prévu plusieurs orifices 126 équi-répartis autour de l'axe O-O formant le port 106, et plus précisément encore selon le mode de réalisation représenté sur la figure 12, deux niveaux d'orifices 126 traversants étagés sur la longueur du carter 120.

Les passages 122 et 124 sont formés respectivement de part et d'autre du passage médian 126. Plus précisément de préférence, le passage 122 est formé de plusieurs orifices 122 équi-répartis autour de l'axe O-O formant le port 102, sur le carter 120 ou sur le bouchon 112.

Le passage 124 peut également être formé de plusieurs orifices équi-répartis autour de l'axe O-O formant le port 104. Cependant, selon le mode de réalisation préférentiel, pour des raisons de fabrication et d'assemblage, le passage 124 est formé d'un orifice qui débouche axialement sur le carter 120 à l'extrémité opposée au bouchon 112.

Le carter 120 et/ou le bouchon 112 comprennent de préférence sur leur surface extérieure deux gorges annulaires 127, 128 disposées entre les passages 126 et 122, respectivement 126 et 124, destinées à recevoir des joints respectifs en contact avec la structure support permettant d'isoler entre elles les liaisons hydrauliques assurées vers les passages 122, 126 et 124.

Le carter 120 comprend sur sa surface interne et en sa partie médiane une bague 130 située entre les deux niveaux d'orifices 126 traversants pour assurer le guidage des tiges 164, 184 des clapets de surpression.

Les sièges 132, 134 des clapets 152 et 156 de sélecteur sont formés sur les obturateurs 162, 182 des clapets de surpression.

Les deux sièges 132, 134 sont orientés respectivement vers les extrémités axiales du carter 120.

Chaque clapet de sélecteur 152, 156 comprend un obturateur annulaire 154, 158 placé en regard des sièges précités 132, 134.

En l'espèce selon la figure 12 les obturateurs 154, 158 sont portés par des tiges 153, 157 guidées à coulissement dans les tiges 164, 184 des clapets de surpression.

Le diamètre extérieur des obturateurs 154, 158 est supérieur au diamètre des sièges 132, 134.

Ainsi, lorsque l'un des obturateurs 154, 158 repose sur le siège associé 132, 134, le clapet correspondant du sélecteur 150 est fermé. Inversement, lorsque un obturateur 154, 158 est séparé du siège associé 132, 134, le clapet correspondant du sélecteur 150 est ouvert.

Comme indiqué précédemment pour le premier mode de réalisation illustré sur les figures 6 à 11, l'utilisation de deux clapets séparés 132/154 et 134/158 pour former le sélecteur 150, permet la fermeture simultanée des deux clapets du sélecteur lorsque la pression sur les deux lignes d'alimentation est simultanément supérieure au seuil de consigne

Les sièges annulaires 155, 159 dirigés axialement vers la partie médiane du sélecteur 150 et destinés à coopérer respectivement avec les obturateurs 162, 182 des clapets de surpression, sont formés respectivement sur l'extrémité du bouchon 112 et sur un décrochement formé à l'extrémité opposée sur la face interne du carter 120.

Les obturateurs 162, 182 sont formés d'excroissances sur une extrémité des tiges 164, 184. Les obturateurs 162, 182 sont placés sur l'intérieur des sièges 155, 159 dans la partie centrale du dispositif.

Les obturateurs 162, 182 sont sollicités vers une extrémité axiale respective du carter 120 par un ressort respectif 170, 190.

Ainsi, les obturateurs 162, 182 sont sollicités respectivement en appui contre les sièges 155, 159.

Les ressorts 170, 190 sont intercalés sur les tiges 164, 184, entre les obturateurs 154, 158 et les extrémités axiales de la bague 130.

L'effort exercé par chaque ressort 170, 190 et par conséquent le tarage de la pression d'ouverture de chaque clapet de surpression peut être réglé par dimensionnement de la longueur de la bague 130 et/ou sélection des caractéristiques longueur/raideur des ressorts 170, 190.

Par ailleurs comme indiqué précédemment, selon l'invention, un organe élastique 140 est intercalé entre les obturateurs 154 et 158, plus précisément en l'espèce entre les tiges associées 153, 157, des deux clapets séparés de sélecteur. L'organe élastique 140 est formé de préférence d'un ressort hélicoïdal travaillant à la compression. Cet organe élastique 140 est taré de sorte que lorsque la pression de travail sur la première ligne et sur la deuxième ligne est inférieure à un seuil de consigne, l'un des clapets 132/154 du sélecteur est ouvert tandis que l'autre clapet 134/158 du sélecteur est fermé, alors que quand la pression de travail sur la première ligne et sur la deuxième ligne est supérieure au seuil de consigne, les deux clapets du sélecteur 132/154 et 134/158 sont fermés.

L'on observera que selon le mode de réalisation représenté sur la figure 12, pour permettre le passage du fluide les tiges 153 et 157 comportent une chambre borgne 1530, 1570, fermée par les obturateurs 154, 158 mais qui débouche sur l'extrémité axiale interne des tiges 153 et 157 et qui débouche par ailleurs radialement vers l'extérieur via des passages 1531 et 1571 au niveau de l'obturateur 154, 158 mais dans une zone de cet obturateur 154, 158 en deçà de la zone destinée à entrer en contact avec le siège respectif 132, 134.

De même un jeu est ménagé entre les tiges centrales 153, 157 et respectivement les tiges externes 164, 184 et l'espace annulaire ainsi formé débouche sur l'extérieur des tiges 164 et 184 par l'intermédiaire d'orifices radiaux

Le fonctionnement du dispositif de limitation représenté sur la figure 12 est globalement identique à celui décrit en regard des figures 6 à 11 et ne sera donc pas décrit dans le détail par la suite.

L'homme de l'art comprendra que selon l'invention, chaque clapet de surpression 160, 180 comprend un ressort 140 ou 170, 190 adapté pour autoriser l'ouverture du clapet de surpression associé lorsqu'il reçoit une pression supérieure à un second seuil supérieur au seuil de consigne.

L'on observera que là encore la distance qui sépare au repos les extrémités en regard des deux tiges 164, 184 doit être suffisante pour permettre un déplacement suffisant des obturateurs associés 162, 182 pour assurer une ouverture du clapet de surpression correspondant propre à ne pas créer de pertes de charge notables.

De préférence cette distance est suffisante pour permettre en cas de surpression simultanée sur les deux lignes 11 et 12, une ouverture simultanée des deux clapets de surpression.

L'invention peut ainsi être intégrée ou juxtaposée à l'une des machines M1 M2.

## Revendications

1. Dispositif de limitation de pression adapté pour être installé dans un système comprenant une première ligne (11) et une deuxième ligne (12) pouvant comprendre de l'huile sous pression et comprenant une ligne d'évacuation et/ou gavage (10), lequel dispositif comprend un sélecteur de pression (150) et deux clapets de surpression (160, 180), le sélecteur (150) comprenant deux clapets séparés (152, 156) et un organe élastique (140) intercalé entre les obturateurs (154, 158) de ces deux clapets séparés de sélecteur de sorte que lorsque la pression de travail sur la première ligne et sur la deuxième ligne est inférieure à un seuil de consigne, l'un des clapets (152, 156) du sélecteur est ouvert tandis que l'autre clapet du sélecteur est fermé, alors que quand la pression de travail sur la première ligne et sur la deuxième ligne est supérieure au seuil de consigne, les deux clapets du sélecteur (152, 156) sont fermés, comprenant en outre des moyens de réglage (172, 192) respectivement des clapets de surpression disposés sur l'extérieur des clapets du sélecteur de pression pour permettre un réglage de manière indépendante du tarage de chaque clapet de surpression.

2. Dispositif selon la revendication 1, **caractérisé en ce que** chaque clapet de surpression (160, 180) comprend un ressort (140 ; 170, 190) adapté pour autoriser l'ouverture du clapet de surpression associé lorsqu'il reçoit une pression supérieure à un second seuil supérieur au seuil de consigne.

3. Dispositif selon la revendication 2, **caractérisé en ce que** le ressort associé au clapet de surpression (160, 180) et adapté pour autoriser l'ouverture du clapet de surpression associé lorsqu'il reçoit une pression supérieure au second seuil est formé de l'organe élastique (140) intercalé entre les obturateurs (154, 158) du sélecteur.

4. Dispositif selon la revendication 2, **caractérisé en ce que** chaque clapet de surpression (160, 180) comprend un ressort respectif (170, 190) taré pour autoriser l'ouverture du clapet de surpression associé lorsqu'il reçoit une pression supérieure au second seuil.

5. Dispositif selon l'une des revendications 1 à 3, **caractérisé en ce que** l'organe élastique (140) est placé entre les obturateurs (162, 182) des deux clapets de surpression.

6. Dispositif selon l'une des revendications 1 à 5, **caractérisé en ce que** les clapets de surpression (155/162, 159/182) sont placés au centre du dispositif et sont portés par les clapets du sélecteur (132/154, 134/158).

7. Dispositif selon l'une des revendications 1 à 5, **caractérisé en ce que**, les clapets du sélecteur (132/154, 134/158) sont placés au centre du dispositif et sont portés par les clapets de surpression (155/162, 159/182).

8. Dispositif selon l'une des revendications 1 à 7, **caractérisé en ce que** chaque clapet de surpression (160, 180) comprend un obturateur (162, 182) formé d'une excroissance sur une extrémité d'une tige (164, 184), chaque tige (164, 184) et son obturateur associé (162, 182) étant sollicité vers une extrémité axiale respective du dispositif par un ressort respectif (170, 190) intercalé sur une tige (164, 184), entre une excroissance (154, 156) formant obturateur et une butée (172, 192 ; 130).

9. Dispositif selon la revendication 8, **caractérisé en ce que** chaque butée (172, 192) est réglable en position sur la longueur de la tige associée (164, 184) pour définir l'effort exercé par chaque ressort (170, 190) et par conséquent le tarage de la pression d'ouverture de chaque clapet de surpression.

10. Dispositif selon l'une des revendications 8 ou 9, **caractérisé en ce que** chaque butée (172, 192) est fixée en position sur sa tige respective (164, 184) par vissage ou sertissage.

11. Dispositif selon l'une des revendications 8 ou 9, **caractérisé en ce que** pour permettre le passage du fluide des tiges (153, 157) des clapets de sélecteur comportent une chambre borgne (1530, 1570), qui débouche sur l'extrémité axiale interne des tiges (153, 157) et qui débouche par ailleurs radialement vers l'extérieur via des passages (1531, 1571) au niveau de l'obturateur (154, 158) associé dans une zone de cet obturateur (154, 158) en deçà de la zone destinée à entrer en contact avec le siège respectif (132, 134) associé et un jeu est ménagé entre les tiges centrales (153, 157) des clapets de sélecteur et respectivement les tiges externes (164, 184) des clapets de surpression et l'espace annulaire ainsi formé débouche sur l'extérieur des tiges (164, 184) des clapets de surpression par l'intermédiaire d'orifices radiaux

12. Système d'assistance pour véhicule **caractérisé en ce qu'**il comprend un dispositif conforme à l'une des revendications 1 à 11.

13. Véhicule équipé d'un dispositif de limitation de pression conforme à l'une des revendications 1 à 11.

## Patentansprüche

1. Druckbegrenzungsvorrichtung, die zum Einbau in ein System geeignet ist, umfassend eine erste Leitung (11) und eine zweite Leitung (12), die Öl unter Druck umfassen können und umfassend eine Ableitungs- und/oder Füllleitung (10), wobei die Vorrichtung einen Druckwahlschalter (150) und zwei Überdruckventile (160, 180) umfasst, wobei der Wahlschalter (150) zwei separate Ventile (152, 156) und ein elastisches Organ (140) umfasst, das zwischen den Verschlussvorrichtungen (154, 158) dieser zwei separaten Schaltventilen derart angeordnet ist, dass, wenn der Arbeitsdruck auf der ersten Leitung und auf der zweiten Leitung unter einem Sollwert liegt, eines der Ventile (152, 156) des Wahlschalters geöffnet ist, wohingegen das andere Ventil des Wahlschalters geschlossen ist, wogegen, wenn der Arbeitsdruck auf der ersten Leitung und auf der zweiten Leitung über dem Sollwert liegt, die zwei Ventile des Wahlschalters (152, 156) geschlossen sind, umfassend ferner Einstellmittel (172, 192) jeweils der Überdruckventile, die außen auf den Ventilen des Druckwahlschalters angeordnet sind, um eine unabhängige Einstellung der Tarierung jedes Überdruckventils zu erlauben.

2. Vorrichtung nach Anspruch 1, **dadurch gekennzeichnet, dass** jedes Überdruckventil (160, 180) eine Feder (140; 170, 190) umfasst, die geeignet ist, das Öffnen des zugeordneten Überdruckventils zu gestatten, wenn es einen Druck über einem zweiten Wert über dem Sollwert erhält.

3. Vorrichtung nach Anspruch 2, **dadurch gekennzeichnet, dass** die dem Überdruckventil (160, 180) zugeordnete und zur Gestattung des Öffnens des zugeordneten Überdruckventils, wenn es einen Druck über dem zweiten Wert erhält, geeignete Feder von dem elastischen Organ (140) gebildet ist, das zwischen den Verschlussvorrichtungen (154, 158) des Wahlschalters angeordnet ist.

4. Vorrichtung nach Anspruch 2, **dadurch gekennzeichnet, dass** jedes Überdruckventil (160, 180) eine jeweilige Feder (170, 190) umfasst, die tariert ist, um das Öffnen des zugeordneten Überdruckventils zu gestatten, wenn es einen Druck über dem zweiten Wert erhält.

5. Vorrichtung nach einem der Ansprüche 1 bis 3, **dadurch gekennzeichnet, dass** das elastische Organ (140) zwischen den Verschlussvorrichtungen (162, 182) der zwei Überdruckventile platziert ist.

6. Vorrichtung nach einem der Ansprüche 1 bis 5, **dadurch gekennzeichnet, dass** die Überdruckventile (155/162, 159/182) in der Mitte der Vorrichtung platziert sind und von den Ventilen des Wahlschalters (132/154, 134/158) getragen werden.

7. Vorrichtung nach einem der Ansprüche 1 bis 5, **dadurch gekennzeichnet, dass** die Ventile des Wahlschalters (132/154, 134/158) in der Mitte der Vorrichtung platziert sind und von den Überdruckventilen (155/162, 159/182) getragen werden.

8. Vorrichtung nach einem der Ansprüche 1 bis 7, **dadurch gekennzeichnet, dass** jedes Überdruckventil (160, 180) eine Verschlussvorrichtung (162, 182) umfasst, die von einem Vorsprung auf einem Ende einer Stange (164, 184) gebildet ist, wobei jede Stange (164, 184) und ihre zugeordnete Verschlussvorrichtung (162, 182) von einer jeweiligen Feder (170, 190), die auf einer Stange (164, 184) zwischen einem verschlussbildenden Vorsprung (154, 156) und einem Anschlag (172, 192; 130) angeordnet ist, zu einem jeweiligen axialen Ende der Vorrichtung beansprucht wird.

9. Vorrichtung nach Anspruch 8, **dadurch gekennzeichnet, dass** die Position jedes Anschlags (172, 192) auf der Länge der zugeordneten Stange (164, 184) einstellbar ist, um die Kraft, die von jeder Feder (170, 190) ausgeübt wird und folglich die Tarierung des Öffnungsdrucks jedes Überdruckventils festzulegen.

10. Vorrichtung nach einem der Ansprüche 8 oder 9, **dadurch gekennzeichnet, dass** die Position jedes Anschlags (172, 192) auf seiner jeweiligen Stange (164, 184) durch Schrauben oder Bördeln festgelegt ist.

11. Vorrichtung nach einem der Ansprüche 8 oder 9, **dadurch gekennzeichnet, dass**, um den Durchgang des Fluids zu erlauben, Stangen (153, 157) der Schaltventile eine Blindkammer (1530, 1570) aufweisen, die auf dem inneren axialen Ende der Stangen (153, 157) ausmündet und die im Übrigen radial nach außen über Durchgänge (1531, 1571) im Bereich des zugeordneten Verschlusses (154, 158) in einer Zone dieses Verschlusses (154, 158) unterhalb der Zone ausmündet, die bestimmt ist, mit dem zugeordneten jeweiligen Sitz (132, 134) in Kontakt zu treten, und ein Spiel zwischen den zentralen Stangen (153, 157) der Schaltventile und jeweils den äußeren Stangen (164, 184) der Überdruckventile ausgebildet ist und der derart gebildete ringförmige Raum anhand radialer Öffnungen außerhalb der Stangen (164, 184) der Überdruckventile ausmündet.

12. Fahrzeugassistenzsystem, **dadurch gekennzeichnet, dass** es eine Vorrichtung nach einem der Ansprüche 1 bis 11 umfasst.

13. Fahrzeug, ausgestattet mit einer Druckbegrenzungsvorrichtung nach einem der Ansprüche 1 bis 11.

## Claims

1. A pressure-limiting device adapted to be installed in a system comprising a first line (11) and a second line (12) that may comprise pressurised oil and comprising a discharge and/or booster line (10), which device comprises a pressure selector (150) and two pressure relief valves (160, 180), the selector (150) comprising two separate valves (152, 156) and an elastic member (140) interposed between the plugs (154, 158) of these two separate selector valves so that when the working pressure on the first line and on the second line is less than a setpoint threshold, one of the selector valves (152, 156) is open while the other selector valve is closed, while when the working pressure on the first line and on the second line is greater than the setpoint threshold, both selector valves (152, 156) are closed, further comprising means for adjusting (172, 192) respectively the pressure relief valves disposed on the outside of the pressure selector valves to allow independently adjusting the calibration of each pressure relief valve.

2. The device according to claim 1, **characterised in that** each pressure relief valve (160, 180) comprises a spring (140; 170, 190) adapted to authorise the opening of the associated pressure relief valve when it receives a pressure greater than a second threshold greater than the setpoint threshold.

3. The device according to claim 2, **characterised in that** the spring associated with the pressure relief valve (160, 180) and adapted to authorise the opening of the associated pressure relief valve when it receives a pressure greater than the second threshold is formed of the elastic member (140) interposed between the plugs (154, 158) of the selector.

4. The device according to claim 2, **characterised in that** each pressure relief valve (160, 180) comprises a respective spring (170, 190) calibrated to authorise the opening of the associated pressure relief valve when it receives a pressure greater than the second threshold.

5. The device according to one of claims 1 to 3, **characterised in that** the elastic member (140) is placed between the plugs (162, 182) of the two pressure relief valves.

6. The device according to one of claims 1 to 5, **characterised in that** the pressure relief valves (155/162, 159/182) are placed in the centre of the device and are carried by the selector valves (132/154, 134/158) .

7. The device according to one of claims 1 to 5, **characterised in that**, the selector valves (132/154, 134/158) are placed in the centre of the device and are carried by the pressure relief valves (155/162, 159/182).

8. The device according to one of claims 1 to 7, **characterised in that** each pressure relief valve (160, 180) comprises a plug (162, 182) formed from a protrusion on one end of a rod (164, 184), each rod (164, 184) and its associated plug (162, 182) being biased towards a respective axial end of the device by a respective spring (170, 190) interposed on a rod (164, 184), between a protrusion (154, 156) forming a plug and a stop (172, 192; 130).

9. The device according to claim 8, **characterised in that** each stop (172, 192) is adjustable in a position on the length of the associated rod (164, 184) to define the force exerted by each spring (170, 190) and consequently the calibration of the pressure for opening each pressure relief valve.

10. The device according to one of claims 8 or 9, **characterised in that** each stop (172, 192) is fastened in a position on its respective rod (164, 184) by screwing or crimping.

11. The device according to one of claims 8 or 9, **characterised in that** to allow the passage of the fluid, rods (153, 157) of the selector valves include a blind chamber (1530, 1570), which opens onto the inner axial end of the rods (153, 157) and which, in addition, opens radially outwards via passages (1531, 1571) at the plug (154, 158) associated in an area of this plug (154, 158) below the area intended to come into contact with the associated respective seat (132, 134) and a clearance is formed between the central rods (153, 157) of the selector valves and respectively the external rods (164, 184) of the pressure relief valves and the annular space thus formed opens onto the outside of the rods (164, 184) of the pressure relief valves by means of radial orifices.

12. An assistance system for a vehicle **characterised in that** it comprises a device in accordance with one of claims 1 to 11.

13. A vehicle equipped with a pressure-limiting device in accordance with one of claims 1 to 11.
